# EUROPÄISCHE PATENTSCHRIFT

(11) **EP 2 634 663 B1**
(45) Veröffentlichungstag und Bekanntmachung des Hinweises auf die Patenterteilung: **11.10.2017**
(21) Anmeldenummer: 13000019.3
(22) Anmeldetag: 03.01.2013
(51) Int. Cl.: G05D 23/19, B29C 47/92, B29C 47/00, B29C 47/02, B29C 47/88, G01K 13/00

(54) **Verfahren und Vorrichtung zur Messung der Temperatur eines strangförmigen Gutes**
Method and device for measuring the temperature of a string-shaped item
Procédé et dispositif destinés à la mesure de la température d'un produit allongé

(30) Priorität: 28.02.2012 DE 102012003724
(43) Veröffentlichungstag der Anmeldung: 04.09.2013
(73) Patentinhaber: SIKORA AG, 28307 Bremen (DE)
(72) Erfinder: Sikora, Harald, 28357 Bremen (DE); Parga Garcia, Abraham, 28357 Bremen (DE)
(74) Vertreter: Hauck Patentanwaltspartnerschaft mbB

(56) Entgegenhaltungen:
- JP-A- H0 471 118
- US-A- 3 328 554
- US-A- 3 420 983
- US-A- 3 540 281
- US-A- 3 739 132
- Zumbach: "Autac 250S Reliable measurement and control of wire temperature", , Nr. PERI.005.0001.E 30. August 2007 (2007-08-30), Seiten 1-2, XP002695712, Gefunden im Internet: URL:http://www.zumbach.com/newsletter/pdf/ AUTAC%20250S_PERI.005.0001.E.pdf [gefunden am 2013-04-18]
- Zumbach: "Zumbach WST Wire preheaters", , 28. Februar 2000 (2000-02-28), Seiten 1-20, XP055066024, Switzerland Gefunden im Internet: URL:http://www.mejicoro.com/PDF/zumb/WST_W EST.002.0001.E.pdf [gefunden am 2013-06-10]

## Beschreibung

Die Erfindung betrifft ein Verfahren und eine Vorrichtung zur Messung der Temperatur eines auf eine Solltemperatur zu erwärmenden strangförmigen Gutes. Bei solchen strangförmigen Gütern kann es sich beispielsweise um Metalldrähte handeln, die als Leiter eines Kabels dienen sollen. Üblicherweise wird auf derartige Drähte in einer Extrusionsvorrichtung eine Kunststoffisolierung extrudiert. Für ein ordnungsgemäßes Aufbringen und Anhaften des Extrudats auf dem Draht ist es erforderlich, dass dieser eine vorgegebene Temperatur besitzt. Die Drähte werden daher in der Regel in einem Vorheizgerät vor dem Extrusionsprozess auf eine Solltemperatur erwärmt. Ein solches Vorheizgerät wird von der Anmelderin beispielsweise unter dem Namen PREHEATER 6000 vertrieben. Dabei wird der Draht über zwei drehbar gelagerte Scheiben geführt, von denen zumindest eine elektrisch leitend ist und somit einen Kurzschluss in der über die Scheiben geführten Drahtschleife bewirkt. Der Draht kann dann mittels einer zwischen den Scheiben angeordneten Heizeinrichtung auf die Solltemperatur erwärmt werden.

Die Ausbildung einer im Rahmen eines Extrusionsverfahrens aufgebrachten Kunststoffisolierung hängt empfindlich von der Temperatur des Drahtes ab. Insbesondere bei im Rahmen einer Extrusion aufgebrachtem schäumendem Material können Schwankungen in der Temperatur des Drahtes zu einer ungleichmäßigen Dicke der Kunststoffisolation führen. Schwankungen in der Kunststoffisolierung können gerade bei Datenkabeln zu Kapazitätsänderungen und damit zu Änderungen des Wellenwiderstandes führen. Dies wiederum kann zu einer unerwünschten Rückflussdämpfung führen. Darüber hinaus kann es bei Abweichungen von der Solltemperatur auch zu Problemen hinsichtlich der Anhaftung des Kunststoffmaterials an dem Draht kommen.

Es ist bereits vorgeschlagen worden, die Temperatur des Drahtes nach Durchlaufen einer Vorheizeinrichtung zu messen. Bekannte Messverfahren basieren auf der Auswertung des temperaturabhängigen Emissionsverhaltens des Drahtes. Gerade bei in diesem Zusammenhang häufig zu vermessenden Kupferdrähten kann das Emissionsverhalten allerdings erheblich variieren. Hierdurch kommt es zu Ungenauigkeiten bei der Temperaturmessung und damit zu Problemen bei einem anschließenden Extrusionsprozess.

Aus US 3 739 132 A ist ein Steuerkreis bekannt, bei dem mittels einer Widerstandsheizung über eine vorgegebene Wegstrecke ein Draht geheizt wird. Die elektrischen Kontakte werden dabei durch Rollen gebildet. Am Ende der Heizstrecke ist ein einziger optischer Temperatursensor angeordnet. Aus Zumbach: "Autac 250S Reliable measurement and control of wire temperature" und aus Zumbach: "Zumbach WST Wire preheaters" sind Drahtheizvorrichtungen bekannt, bei denen der Draht über Rollen geführt wird. Dabei erfolgt eine berührungslose Temperaturmessung. Aus US 3 328 554 A ist eine Einrichtung zum Heizen kontinuierlich geförderter elektrischer Drähte bekannt als vorbereitende Behandlung für eine anschließende Beschichtung mit einer Kunststoffisolierung in einem Extruder.

JP H 04 71118 A beschreibt eine Temperaturmessung eines Leiters mittels zweier Thermistoren vor dem Eintritt in eine Induktionsspule und nach dem Austritt aus der Induktionsspule. Die gemessenen elektrischen Signale werden in einer Vergleichseinheit miteinander abgeglichen. Anschließend wird über einen Controller die Ausgangsleistung der Induktionsspule angepasst.

Aus US 3 540 281 A ist ein Verfahren zum Messen der Oberflächentemperatur einer Heizrolle bekannt, über die eine synthetische Garnfaser geführt wird. Zur Überwachung der Temperatur der Heizrolle wird mittels eines Kreidestifts Kreide auf die Heizrolle aufgebracht und der Phasenübergang der Kreide vom festen in den flüssigen Zustand beobachtet.

Ausgehend von dem erläuterten Stand der Technik liegt der Erfindung die Aufgabe zugrunde, ein Verfahren und eine Vorrichtung der eingangs genannten Art bereitzustellen, mit denen die Temperatur des strangförmigen Gutes in einfacher und zuverlässiger Weise gemessen werden kann.

Die Erfindung löst diese Aufgabe durch die Gegenstände der Ansprüche 1 und 14. Vorteilhafte Ausgestaltungen finden sich in den abhängigen Ansprüchen, der Beschreibung und den Figuren.

Die Erfindung löst die Aufgabe zum einen durch ein Verfahren zur Messung der Temperatur eines auf eine Solltemperatur zu erwärmenden strangförmigen Gutes, umfassend die Schritte: das strangförmige Gut wird in wärmeleitendem Kontakt über mindestens eine auf eine vorgegebene Temperatur beheizte drehbar gelagerte Scheibe geführt, es wird eine Differenz gemessen zwischen der Temperatur des strangförmigen Gutes oder einem die Temperatur des strangförmigen Gutes charakterisierenden Wert vor dem Führen über die Scheibe und nach dem Führen über die Scheibe.

Die Erfindung löst die Aufgabe außerdem durch eine Vorrichtung zur Messung der Temperatur eines auf eine Solltemperatur zu erwärmenden strangförmigen Gutes, umfassend: eine Fördereinrichtung für das strangförmige Gut, die dazu ausgebildet ist, das strangförmige Gut in wärmeleitendem Kontakt über mindestens eine drehbar gelagerte Scheibe zu fördern, eine Scheibenheizeinrichtung, mit der die Scheibe auf eine vorgegebene Temperatur beheizbar ist, und eine Differenzmesseinrichtung, mit der eine Differenz zwischen der Temperatur des strangförmigen Gutes oder einem die Temperatur des strangförmigen Gutes charakterisierenden Wert vor dem Fördern über die Scheibe und nach dem Fördern über die Scheibe messbar ist.

Bei der Scheibe kann es sich beispielsweise um eine Metallscheibe handeln. Es sind aber andere Materialen für die Scheibe denkbar, beispielsweise Keramik. Das strangförmige Gut kann ein Draht, insbesondere ein Metalldraht, wie ein Kupferdraht, sein. Der Draht kann später als elektrischer Leiter dienen. Die Solltemperatur kann entsprechend eine geeignete Temperatur sein, um das spätere Aufbringen einer (Kunststoff-)Isolierung auf den Leiter, zum Beispiel in einem Extrusionsverfahren, zu ermöglichen. Das strangförmige Gut, insbesondere der Draht, wird dabei im Zuge des erfindungsgemäßen Verfahrens bzw. in der erfindungsgemäßen Vorrichtung kontinuierlich gefördert. Das strangförmige Gut wird über die mindestens eine Scheibe geführt, wobei ein wärmeleitender Kontakt besteht, so dass eventuelle Temperaturunterschiede zwischen der Scheibe und dem strangförmigen Gut zumindest teilweise, insbesondere im Wesentlichen vollständig, ausgeglichen werden. Die Scheibe ist auf eine vorgegebene Temperatur vorgeheizt. Dazu kann sie beispielsweise mindestens ein in die Scheibe integriertes Heizelement aufweisen. Falls ein solches integriertes Heizelement elektrisch betrieben wird, kann die elektrische Energie hierfür der drehbaren Scheibe beispielsweise über Schleifringe zugeführt werden. Die Zufuhr der elektrischen Energie kann aber auch zum Beispiel induktiv erfolgen. Es ist auch möglich, die Scheibe durch mindestens eine externe Heizeinrichtung, beispielsweise eine induktive Heizeinrichtung, oder einen Wärmestrahler oder ähnliches auf die vorgegebene Temperatur zu beheizen.

Erfindungsgemäß wird die Differenz der Temperatur oder eines die Temperatur charakterisierenden Wertes zwischen dem in die Scheibe einlaufenden und dem aus der Scheibe auslaufenden Abschnitt des strangförmigen Gutes gemessen. Die Differenzmessung kann in vorteilhafter Weise berührungslos erfolgen, beispielsweise auf Grundlage einer Auswertung des temperaturabhängigen Emissionsgrades des strangförmigen Gutes. Bestehen Temperaturunterschiede zwischen dem einlaufenden und dem auslaufenden Abschnitt des strangförmigen Gutes, dann sind solche Unterschiede erfindungsgemäß zwar nicht notwendigerweise absolut zu bewerten. Dennoch kann ein Differenzsignal abgeleitet werden, das dem Temperaturunterschied proportional ist. Die Differenz kann fortlaufend gemessen werden. Dies kann wiederholt in vorgegebenen Abständen oder auch kontinuierlich erfolgen. Entsprechend ist die Differenzmesseinrichtung dann dazu ausgerichtet, die Differenz fortlaufend zu messen. Ist die gemessene Differenz ungleich Null, so besteht ein Temperaturunterschied zwischen dem einlaufenden Abschnitt des strangförmigen Gutes und der Scheibe.

Durch die Erwärmung eines strangförmigen Gutes, wie eines elektrischen Leiters, ändern sich verschiedene Eigenschaften desselben, zum Beispiel seine Ausdehnung und sein elektrischer Widerstand. Neben einer beispielsweise berührungslosen Messung der Temperaturdifferenz zwischen dem einlaufenden und dem auslaufenden Abschnitt des strangförmigen Gutes ist es daher auch möglich, zum Beispiel eine Änderung eines elektrischen Leitwertes, eine Längen- und/oder Durchmesseränderung und/oder eine leitwertabhängige Dämpfung zwischen dem einlaufenden und dem auslaufenden strangförmigen Gut zu messen, beispielsweise mittels induktiver Ringsensoren. Es muss also nicht direkt eine Temperaturdifferenz gemessen werden. Vielmehr kann auch eine Differenz zwischen geeigneten, die Temperatur des strangförmigen Gutes charakterisierenden Parametern vor und nach dem Fördern des strangförmigen Gutes über die mindestens eine Scheibe gemessen werden.

Erfindungsgemäß findet also eine Differenzmessung statt. Zur Bestimmung der Temperatur des fortlaufenden strangförmigen Gutes muss also lediglich die Temperatur der erwärmten Scheibe bekannt sein, wenn die Temperatur des einlaufenden und des auslaufenden Abschnittes des strangförmigen Gutes übereinstimmt. Eine Relativmessung der Temperatur zwischen solchen Abschnitten des strangförmigen Gutes ist sehr viel einfacher möglich als die Bestimmung der absoluten Temperatur. Wie eingangs erläutert, weisen insbesondere Kupferdrähte eine erhebliche Schwankungsbreite bezüglich ihres Emissionsgrades auf, typisch von 0,02 bis 0,2. Eine auf der Auswertung des Emissionsgrades des strangförmigen Gutes beruhende absolute Temperaturmessung wäre daher mit erheblichen Ungenauigkeiten verbunden. Dies wird erfindungsgemäß vermieden, da sich bei der erfindungsgemäßen Differenzmessung etwaige Schwankungen beispielsweise hinsichtlich des Emissionsgrades aufheben.

Die Erfindung erlaubt somit in einfacher und insbesondere auch bei Metalldrähten zuverlässiger Weise eine präzise Erkennung einer Abweichung der Temperatur des strangförmigen Gutes von seiner Solltemperatur. Die Erfindung gewährleistet jedoch noch weitere Vorteile. Wie eingangs erwähnt, werden strangförmige Güter häufig in arbeitenden Vorheizgeräten auf die Solltemperatur erwärmt. Derartige Vorheizgeräte können induktiv arbeiten und umfassen in der Regel eine Frequenzansteuerung, die zu einer ungleichmäßigen Erwärmung des strangförmigen Gutes führen kann. Dies wiederum kann aus den eingangs geschilderten Gründen zu Problemen bei einem anschließenden Extrusionsprozess führen. Insbesondere kann es zu einer ungleichmäßigen Anhaftung des Extrudats oder zu einer ungleichmäßigen Aufschäumung eines Extrudats kommen. Die erfindungsgemäß eingesetzte vorgeheizte Scheibe führt in vorteilhafter Weise zu einer Glättung eventueller Temperaturschwankungen, die das strangförmige Gut in einer der beheizten Scheibe vorgeordneten Heizeinrichtung erfahren hat. Dies wiederum verbessert den anschließenden Extrusionsprozess. Wie ebenfalls eingangs erläutert, ist dies besonders wichtig bei Datenkabeln, bei denen Schwankungen in der Isolierung zu Kapazitätsänderungen und damit Änderungen des Wellenwiderstands führen können. Dies wiederum kann zu einer nicht tolerierbaren Rückflussdämpfung und damit zu Problemen bei der Datenübertragung führen. Darüber hinaus schwächt die erfindungsgemäße vorgeheizte Scheibe auch eine unerwünschte Abkühlung des strangförmigen Gutes ab, die es nach Durchlaufen der Vorheizeinrichtung unweigerlich erfährt.

Die vorgegebene Temperatur der Scheibe kann die Solltemperatur des strangförmigen Gutes sein. Wenn die Scheibe auf die Solltemperatur des strangförmigen Gutes vorgeheizt wird, zeigt eine erfindungsgemäß gemessene Differenz unmittelbar an, dass das strangförmige Gut nicht die vorgegebene Solltemperatur hat. Alternativ kann die Scheibe aber auch auf eine vorgegebene Temperatur beheizt werden, die geringer oder größer als die Solltemperatur des strangförmigen Gutes ist. Das strangförmige Gut erfährt dann eine Abkühlung oder eine Erwärmung beim Fördern über die Scheibe. Beispielsweise wenn die vorgegebene Temperatur der Scheibe höher als die Solltemperatur des strangförmigen Gutes ist, kann eine Abkühlung des strangförmigen Gutes ausgeglichen werden, die dieses bereits erfahren hat oder im Zuge seiner weiteren Förderung zu einer Extrusionsvorrichtung noch erfahren wird.

Das strangförmige Gut kann einmal oder mehrmals um die Scheibe herum geführt werden. Die Scheibe kann also von dem strangförmigen Gut ein- oder mehrmals umschlungen werden. Hierdurch werden ein längerer wärmeleitender Kontakt und damit eine bessere Temperaturangleichung zwischen dem strangförmigen Gut und der Scheibe erreicht.

Es ist nach einer Ausgestaltung möglich, die Temperatur des strangförmigen Gutes auf Grundlage der gemessenen Differenz auf die Solltemperatur zu regeln. Auf Grundlage einer gemessenen Differenz kann beispielsweise ein Vorheizgerät, das die Erwärmung des einlaufenden strangförmigen Gutes auf die Solltemperatur vornimmt, derart angesteuert werden, dass die Temperatur des strangförmigen Gutes den gewünschten Sollwert annimmt. Sofern die Scheibe auf die Solltemperatur des strangförmigen Gutes vorgeheizt wird, kann besonders einfach auf eine im Zuge der Messung ermittelte Differenz möglichst nahe Null geregelt werden. Letztlich kann das Vorheizgerät für das strangförmige Gut in einfacher Weise beispielsweise derart angesteuert werden, dass die Temperatur des strangförmigen Gutes mit der Temperatur der erwärmten Scheibe übereinstimmt.

Die Temperatur des strangförmigen Gutes kann im Zuge der Regelung durch Anpassung der Temperatur der Scheibe angepasst werden. Alternativ oder zusätzlich kann die Temperatur des strangförmigen Gutes im Zuge der Regelung auch durch eine Anpassung einer der Scheibe in Bewegungsrichtung des strangförmigen Gutes vorgeordneten Heizeinrichtung angepasst werden. Bei einer solchen Heizeinrichtung kann es sich um eine induktive Heizeinrichtung handeln. Besonders bei sehr dünnen strangförmigen Gütern, insbesondere sehr dünnen Drähten, kann eine Erwärmung allein durch die beheizte Scheibe ausreichend sein. In der Regel wird aber noch eine separate Heizeinrichtung benötigt, die dann im Wesentlichen allein oder gemeinsam mit der beheizten Scheibe das strangförmige Gut erwärmen kann. Beispielsweise kann eine Heizleistung einer solchen separaten Heizeinrichtung in einem Bereich von ca. 90 % der dem strangförmigen Gut insgesamt zugeführten Heizleistung liegen und die Heizleistung der beheizten Scheibe in einem Bereich von ca. 10 % dieser Gesamtheizleistung.

Das strangförmige Gut kann nach einer weiteren Ausgestaltung über zwei drehbar gelagerte Scheiben geführt werden, von denen eine erste die beheizte Scheibe ist und eine zweite eine Umlenkscheibe ist, wobei in Bewegungsrichtung des strangförmigen Gutes eine Heizeinrichtung zwischen der beheizten Scheibe und der Umlenkscheibe angeordnet ist. Die Heizeinrichtung kann die vorstehend angesprochene, zur Regelung der Temperatur des strangförmigen Gutes angepasste Heizeinrichtung sein, beispielsweise eine induktive Heizeinrichtung. Bei dieser Ausgestaltung erfolgt also eine Integration der erfindungsgemäßen Vorrichtung bzw. des erfindungsgemäßen Verfahrens in Vorheizeinrichtungen, wie sie von der Anmelderin beispielsweise unter dem Namen PREHEATER 6000 vertrieben werden. Das strangförmige Gut kann dabei zunächst über die erste Scheibe, anschließend über die zweite Scheibe (Umlenkscheibe) und danach mindestens einmal um die erste Scheibe herum geführt werden, bevor das strangförmige Gut die Vorrichtung wieder verlässt. Die Fördereinrichtung der erfindungsgemäßen Vorrichtung ist dann entsprechend dazu ausgebildet. Besonders bei der Verwendung induktiver bzw. auf Grundlage der Verwendung von Transformatoren arbeitenden konduktiven Heizeinrichtungen kann vorgesehen sein, dass zumindest die beheizte Scheibe elektrisch leitend ist. In diesem Fall bildet die elektrisch leitende Scheibe eine Kurzschlussscheibe, über die das strangförmige Gut, beispielsweise ein Metalldraht, kurzgeschlossen wird. Auf dieser Grundlage kann dann eine Erwärmung des strangförmigen Gutes erfolgen, wie beispielsweise bei dem Vorheizgerät PREHEATER 6000 der Anmelderin. Die elektrische Spannung besteht dabei nur innerhalb der um die Scheiben geführten Schleife des strangförmigen Gutes, während der in die Vorrichtung einlaufende und der aus der Vorrichtung auslaufende Abschnitt des strangförmigen Gutes spannungsfrei sein kann.

Nach einer weiteren Ausgestaltung kann die Temperatur der Scheibe oder ein die Temperatur der Scheibe charakterisierender Wert gemessen werden und mit einer für die Scheibe vorgegebenen Temperatur oder einem eine Solltemperatur charakterisierenden Wert verglichen werden. Sofern dabei eine Abweichung festgestellt wird, wird die Scheibentemperatur auf die vorgegebene Temperatur geregelt. Bei dieser Ausgestaltung erfolgt also eine Regelung der Temperatur der Scheibe auf die vorgegebene Temperatur. Die Temperatur der Scheibe oder ein die Temperatur der Scheibe charakterisierenden Wert kann berührungslos, zum Beispiel mittels eines Infrarotsensors oder einer Wärmebildkamera, gemessen werden. Diese Messung kann wiederum fortlaufend erfolgen, wobei die Scheibentemperaturmesseinrichtung der erfindungsgemäßen Vorrichtung dazu entsprechend ausgebildet ist. Insbesondere kann die Messung wiederholt in vorgegebenen Abständen oder kontinuierlich erfolgen. Auf Grundlage dieser Messung kann dann eine geeignete Scheibenheizeinrichtung angesteuert werden, um die Scheibentemperatur möglichst auf der vorgegebenen Temperatur zu halten. Die Scheibentemperaturregeleinrichtung und die Strangtemperaturregeleinrichtung der erfindungsgemäßen Vorrichtung können natürlich auch durch eine gemeinsame Regeleinrichtung gebildet sein. Ebenfalls ist es natürlich denkbar, dass die Differenzmesseinrichtung und die Scheibentemperaturmesseinrichtung durch eine gemeinsame Messeinrichtung gebildet sind. Es ist aber auch möglich, der Scheibe selbst einen Temperatursensor zuzuordnen.

Nach einer weiteren Ausgestaltung kann vorgesehen sein, dass die Differenz zwischen der Temperatur des strangförmigen Gutes oder dem die Temperatur des strangförmigen Gutes charakterisierenden Wert vor dem Fördern über die Scheibe und nach dem Fördern über die Scheibe mittels mindestens einer Infrarot-Messeinrichtung oder mindestens einer Wärmebildkamera gemessen wird. Hierfür einsetzbare Infrarotsensoren sind kostengünstig. Grundsätzlich kann beispielsweise mindestens ein Infrarotsensor oder mindestens eine Wärmebildkamera in Bewegungsrichtung des strangförmigen Gutes vor und mindestens ein Infrarotsensor bzw. mindestens eine Wärmebildkamera in Bewegungsrichtung des strangförmigen Gutes nach dem Fördern über die mindestens eine Scheibe angeordnet sein. Es ist aber auch möglich, dass nur ein Infrarotsensor oder nur eine Wärmebildkamera vorgesehen ist, die sowohl den einlaufenden als auch den auslaufenden Abschnitt des strangförmigen Gutes gleichzeitig aufnimmt und damit vermisst. Es kann dann also mit einer Aufnahme gleichzeitig die Temperatur des einlaufenden und des auslaufenden Stranges gemessen werden. Außerdem kann mit einem solchen gemeinsamen Infrarotsensor oder mit einer solchen gemeinsamen Wärmebildkamera gleichzeitig auch noch die Temperatur der beheizten Scheibe erfasst werden, über die der Strang geführt wird. In diesem Fall kann also auch eine gegebenenfalls vorgesehne Temperaturregelung für die beheizte Scheibe auf Grundlage eines gemeinsamen Temperatursensors erfolgen.

Nach einer weiteren Ausgestaltung kann die beheizte Scheibe aus zwei Scheibenhälften gebildet sein, die thermisch voneinander isoliert sind. Das strangförmige Gut läuft dann über die erste Scheibenhälfte ein und über die zweite Scheibenhälfte wieder aus. Durch die thermische Isolierung wird eine gegenseitige Temperaturbeeinflussung zwischen dem einlaufenden kalten und dem auslaufenden erwärmten Strangabschnitt verhindert. Dies ist insbesondere vorteilhaft, wenn das strangförmige Gut erst nach dem (ersten) Führen über die beheizte Scheibe einer Heizeinrichtung zugeführt wird. Die Scheibenhälften können jedoch elektrisch miteinander verbunden sein, damit der durch die Vorrichtung geförderte Strang kurzgeschlossen werden kann, beispielsweise für eine induktive Erwärmung. Zur thermischen Isolierung kann zwischen den Scheiben eine thermisch isolierende, jedoch elektrisch leitende Zwischenschicht angeordnet sein.

Wie bereits erwähnt, kann es sich bei dem strangförmigen Gut um einen Draht handeln, insbesondere einen Metalldraht, wie einen Kupferdraht. Dieser Draht kann nach dem Fördern über die mindestens eine Scheibe einer Extrusionsvorrichtung zugeführt werden, in der eine Kunststoffisolation auf den Draht extrudiert wird. Auf diese Weise kann der als elektrischer Leiter dienende Draht dann in an sich bekannter Weise für die spätere Verwendung als Kabel isoliert werden.

Die erfindungsgemäße Vorrichtung kann zur Durchführung des erfindungsgemäßen Verfahrens ausgebildet sein. Entsprechend kann das erfindungsgemäße Verfahren mit der erfindungsgemäßen Vorrichtung durchgeführt werden.

Ausführungsbeispiele der Erfindung werden nachfolgend anhand von Figuren näher erläutert. Es zeigen schematisch:
- Fig. 1: einen Teil einer erfindungsgemäßen Vorrichtung in einer Schnittansicht,
- Fig. 2: die Vorrichtung aus Fig. 1 in einer Draufsicht,
- Fig. 3: die Vorrichtung aus Fig. 1 in einer Seitenansicht in Fig. 2 von rechts, und
- Fig. 4: eine erfindungsgemäße Vorrichtung nach einem zweiten Ausführungsbeispiel in einer Schnittansicht.

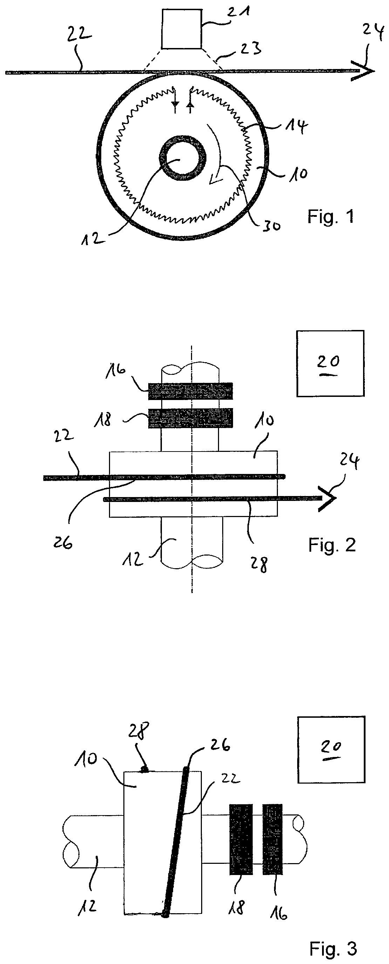

Soweit nichts anderes angegeben ist, bezeichnen in den Figuren gleiche Bezugszeichen gleiche Gegenstände. In den Figuren 1 bis 3 ist bei dem Bezugszeichen 10 eine auf eine vorgegebene Temperatur beheizte Scheibe zu erkennen. In dem gezeigten Beispiel handelt es sich um eine Metallscheibe. Die Scheibe 10 ist auf einer Welle 12 angeordnet, über die sie drehbar gelagert ist. In der Schnittansicht in Fig. 1 ist eine in die Scheibe 10 integrierte elektrische Heizeinrichtung 14 zu erkennen, über die die Scheibe 10 auf die vorgegebene Temperatur beheizt wird. In dem dargestellten Beispiel sind auf der Antriebswelle 12 Schleifringe 16, 18 angeordnet. Über die Schleifringe 16, 18 wird der elektrischen Heizeinrichtung 14 elektrische Energie zugeführt. Die erfindungsgemäße Vorrichtung umfasst darüber hinaus eine aus Gründen der Einfachheit nur in den Figuren 2 und 3 schematisch dargestellte Scheibentemperaturregeleinrichtung 20. Die Scheibentemperaturregeleinrichtung 20 ist mit mindestens einem der Schleifringe 16, 18 verbunden, um über diesen Schleifring, beispielsweise den Schleifring 16, einen elektrischen Strom zur Versorgung der Heizeinrichtung 14 zuzuführen. Der andere Schleifring, beispielsweise der Schleifring 18, kann geerdet sein, so dass der elektrische Strom nach dem Durchlaufen der elektrischen Heizeinrichtung 14 über diesen abgeleitet wird. Die Scheibentemperaturregeleinrichtung kann einen Triac-Steller umfassen.

Weiterhin umfasst die Vorrichtung eine bei dem Ausführungsbeispiel nach den Figuren 1 bis 3 aus Gründen der Übersichtlichkeit nur in Figur 1 dargestellte Messeinrichtung 21, die in unten noch näher zu erläuternder Weise unter anderem die Temperatur der Scheibe 10 misst und ihr Messergebnis der Scheibentemperaturregeleinrichtung 20 zuführt. Stellt die Scheibentemperaturregeleinrichtung 20 eine Abweichung der von der Messeinrichtung 21 gemessenen Scheibentemperatur von dem hierfür vorgegebenen Temperaturwert fest, so steuert die Scheibentemperaturregeleinrichtung 20 den über den entsprechenden Schleifring zugeführten elektrischen Strom zur Versorgung der elektrischen Heizeinrichtung 14 derart an, dass die festgestellte Abweichung möglichst auf Null fällt. Die Messung der Scheibentemperatur kann fortlaufend erfolgen.

In den Figuren 1 bis 3 ist darüber hinaus bei dem Bezugszeichen 22 ein strangförmiges Gut, vorliegend ein Draht 22, wie ein Kupferdraht, zu erkennen. Der Draht 22 wird durch eine nicht näher gezeigte Fördereinrichtung zunächst der Vorrichtung zugeführt, dann in dem gezeigten Beispiel einmal vollständig um die Scheibe 10 herum geführt und wieder aus der Vorrichtung heraus gefördert, wie durch den Pfeil 24 veranschaulicht. Insbesondere in den Figuren 2 und 3 ist zu erkennen, dass der Draht 22 dadurch fortlaufend in einen in die Vorrichtung bzw. die Scheibe 10 einlaufenden Abschnitt 26 und einen aus der Vorrichtung bzw. der Scheibe 10 auslaufenden Abschnitt 28 unterteilt wird. Der einlaufende und der auslaufende Abschnitt 26, 28 liegen nebeneinander auf der Scheibe 10. Der Draht 22 wird dabei in wärmeleitendem Kontakt über die Scheibe 10 gefördert. Die Scheibe 10 kann in der in Fig. 1 durch den Pfeil 30 angedeuteten Drehrichtung mittels eines nicht näher gezeigten Antriebs drehend angetrieben werden oder durch den über die Scheibe 10 geführten Draht 22 gedreht werden.

Die Messeinrichtung 21 arbeitet in dem gezeigten Beispiel berührungslos. Insbesondere kann es sich dabei um einen Infrarotsensor oder eine Wärmebildkamera handeln. Der Infrarotsensor oder die Wärmebildkamera ist, wie in Fig. 1 zu erkennen, von oben auf die Scheibe 10 mit dem einlaufenden und dem auslaufenden Abschnitt 26, 28 des Drahtes 22 gerichtet. Aus den aufgenommenen Messdaten, beispielsweise einer aufgenommenen Infrarotemission, kann zum einen bei bekanntem Emissionsgrad die Temperatur der Scheibe 10 ermittelt werden. Gleichzeitig kann aus dem aufgenommenen Messbild eine Differenz beispielsweise einer Infrarotemission zwischen dem einlaufenden Abschnitt 26 und dem auslaufenden Abschnitt 28 des Drahtes 22 ermittelt werden. Diese Emissionsdifferenz ist charakteristisch für eine Temperaturdifferenz zwischen dem einlaufenden und dem auslaufenden Abschnitt 26, 28. Dabei ist der von der Messeinrichtung 21 erfasste Messbereich bei dem Bezugszeichen 23 dargestellt. Dadurch nimmt die Messeinrichtung 21 den einlaufenden und den auslaufenden Abschnitt 26, 28 des Drahtes 22 auch vor bzw. nach seinem jeweiligen Kontakt mit der Scheibe 10 auf. Durch diese Maßnahme kann eine Störung der Temperaturmessung der Drahtabschnitte 26, 28 durch von der Scheibe 10 stammende Signale, beispielsweise störende Reflektionen, vermieden werden. Die Messeinrichtung 21 stellt also eine kombinierte Differenzmesseinrichtung und Scheibentemperaturmesseinrichtung dar. Auf Grundlage der Differenzmessung kann mittels einer nicht dargestellten Drahttemperaturregeleinrichtung die Temperatur des Drahtes 22 so angepasst werden, dass die gemessene Differenz beispielsweise möglichst nahe Null liegt. Dies ist zum Beispiel dann der Fall, wenn die Scheibe 10 auf die Solltemperatur des Drahtes 22 erwärmt wird. Wiederum kann die Messung und Auswertung der Differenz fortlaufend erfolgen. Dabei kann die Scheibentemperaturregeleinrichtung eine nicht gezeigte, der Scheibe 10 vorgeordnete Heizeinrichtung ansteuern, um die Temperatur des Drahtes 22 in der gewünschten Weise anzupassen. Es ist auch denkbar, zusätzlich oder alternativ die Scheibenheizeinrichtung 14 anzupassen, um Einfluss auf die Temperatur des Drahtes 22 zu nehmen. Der Draht 22 wird in dem gezeigten Beispiel nach dem Durchlaufen der erfindungsgemäßen Vorrichtung einer nicht gezeigten Extrusionsvorrichtung zugeführt, in der eine Kunststoffisolation auf den Draht 22 extrudiert wird.

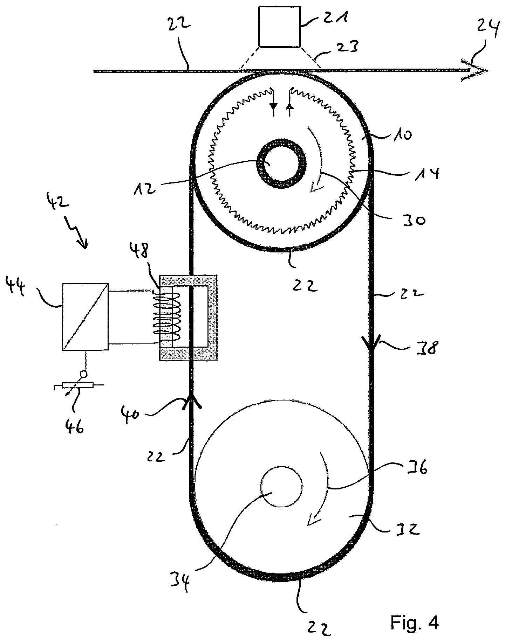

In Fig. 4 ist ein zweites Ausführungsbeispiel einer erfindungsgemäßen Vorrichtung gezeigt. Bei diesem Ausführungsbeispiel ist die in den Figuren 1 bis 3 dargestellte Vorrichtung in ein Leitervorwärmgerät integriert, wie es von der Anmelderin beispielsweise unter dem Namen PREHEATER 6000 vertrieben wird. Bei dem in Fig. 4 gezeigten Ausführungsbeispiel umfasst die Vorrichtung neben der in der oben erläuterten Weise beheizten und drehbar gelagerten Scheibe 10 eine zweite Scheibe, nämlich eine Umlenkscheibe 32, die ebenfalls auf einer Welle 34 drehbar gelagert ist, wie durch den Pfeil 36 veranschaulicht. Der Draht 22 wird bei dem Ausführungsbeispiel nach Fig. 4 zunächst über die beheizte Scheibe 10 zu der Umlenkscheibe 32 geführt, wie durch den Pfeil 38 veranschaulicht. Der Draht 22 wird dabei um die Umlenkscheibe 32 lediglich herumgeführt und danach wieder zu der beheizten Scheibe 10 gefördert, wie durch den Pfeil 40 in Fig. 4 veranschaulicht. Anschließend wird der Draht 22 in der in den Figuren 1 bis 3 gezeigten Weise einmal vollständig um die beheizte Scheibe 10 herum geführt und anschließend aus der Vorrichtung heraus gefördert, wie durch den Pfeil 24 veranschaulicht. Während die beheizte Scheibe 10 elektrisch leitend ist, muss die Umlenkscheibe 32 nicht elektrisch leitend sein. Ausreichend ist, wenn durch die beheizte Scheibe 10 ein Kurzschluss in der um die Scheiben 10, 32 herum geführten Drahtschleife erzeugt wird. Es ist dann möglich, mittels einer allgemein bei dem Bezugszeichen 42 gezeigten, in Förderrichtung des Drahtes 22 zwischen der Umlenkscheibe 32 und der beheizten Scheibe 10 angeordneten Heizeinrichtung den Draht 22 in gewünschter Weise erwärmen. In dem gezeigten Beispiel umfasst die Heizeinrichtung 42 einen Frequenzumrichter 44, einen Leistungssteller 46 sowie einen Transformator 48. Die kurzgeschlossene Drahtschleife bildet dann eine Sekundärwicklung des Transformators 48. Derartige Heizeinrichtungen 42 sind grundsätzlich bekannt, beispielsweise aus dem Produkt PREHEATER 6000 der Anmelderin.

In der oben zu den Figuren 1 bis 3 erläuterten Weise wird auch bei dem Ausführungsbeispiel nach Fig. 4 die Temperatur der Scheibe 10 auf einen vorgegebenen Wert geregelt, beispielsweise die Solltemperatur des zu erwärmenden Drahtes 22. Ebenfalls in der oben erläuterten Weise wird von der Messeinrichtung 21 neben der Temperatur der Scheibe 10 auch die Differenz der Temperatur oder einem die Temperatur charakterisierenden Wert zwischen dem einlaufenden Drahtabschnitt 26 und dem auslaufenden Drahtabschnitt 28 gemessen. Weiterhin wird in der oben zu den Figuren 1 bis 3 erläuterten Weise auf Grundlage dieser Differenzmessung die Temperatur des Drahtes 22 so angesteuert, dass die gemessene Differenz beispielsweise möglichst den Wert Null annimmt. In dem in Fig. 4 gezeigten Beispiel kann die Anpassung der Drahttemperatur in besonders einfacher Weise durch die für die Leitervorwärmung ohnehin genutzte Heizeinrichtung 42 erfolgen. So wird auch bei dem in Fig. 4 gezeigten Beispiel der Draht 22 nach Durchlaufen der erfindungsgemäßen Vorrichtung einer nicht näher dargestellten Extrusionsvorrichtung zugeführt, in der eine Kunststoffisolation auf den Draht 22 extrudiert wird. Zum Vorwärmen des Drahtes 22 dient im Wesentlichen die Heizeinrichtung 42. Von der beheizten Scheibe 10 kann dabei eine im Vergleich zur Heizeinrichtung 42 geringe zusätzliche Heizleistung erzeugt werden.

Mit der erfindungsgemäßen Vorrichtung bzw. dem erfindungsgemäßen Verfahren ist in einfacher und zuverlässiger Weise eine Messung und Regelung der Drahttemperatur auf einen Sollwert möglich. Gleichzeitig werden durch die beheizte Scheibe 10 beispielsweise durch die Heizeinrichtung 42 erzeugte Temperaturschwankungen geglättet, was sich vorteilhaft auf die anschließende Extrusion auswirkt.

## Patentansprüche

1. Verfahren zur Messung der Temperatur eines auf eine Solltemperatur zu erwärmenden strangförmigen Gutes, **gekennzeichnet durch** die Schritte:
- das strangförmige Gut (22) wird in wärmeleitendem Kontakt über mindestens eine auf eine vorgegebene Temperatur beheizte drehbar gelagerte Scheibe (10) gefördert,
- mittels mindestens einer Infrarot-Messeinrichtung oder mindestens einer Wärmebildkamera wird eine Differenz gemessen zwischen der Temperatur des strangförmigen Gutes (22) oder einem die Temperatur des strangförmigen Gutes (22) charakterisierenden Wert vor dem Fördern über die mindestens eine Scheibe (10) und nach dem Fördern über die mindestens eine Scheibe (10).

2. Verfahren nach Anspruch 1, **dadurch gekennzeichnet, dass** die vorgegebene Temperatur der mindestens einen Scheibe (10) die Solltemperatur des strangförmigen Gutes (22) ist.

3. Verfahren nach einem der vorhergehenden Ansprüche, **dadurch gekennzeichnet, dass** das strangförmige Gut (22) einmal oder mehrmals um die mindestens eine Scheibe (10) herumgeführt wird.

4. Verfahren nach einem der vorhergehenden Ansprüche, **dadurch gekennzeichnet, dass** die Temperatur des strangförmigen Gutes (22) auf Grundlage der gemessenen Differenz auf die Solltemperatur geregelt wird.

5. Verfahren nach Anspruch 4, **dadurch gekennzeichnet, dass** die Temperatur des strangförmigen Gutes (22) durch Anpassung der Temperatur der mindestens einen Scheibe (10) auf die Solltemperatur geregelt wird.

6. Verfahren nach einem der Ansprüche 4 oder 5, **dadurch gekennzeichnet, dass** die Temperatur des strangförmigen Gutes (22) durch Anpassung einer der mindestens einen Scheibe (10) in Bewegungsrichtung des strangförmigen Gutes vorgeordneten Heizeinrichtung (42) auf die Solltemperatur geregelt wird.

7. Verfahren nach einem der vorhergehenden Ansprüche, **dadurch gekennzeichnet, dass** das strangförmige Gut (22) über zwei drehbar gelagerte Scheiben (10, 32) geführt wird, von denen eine erste die mindestens eine beheizte Scheibe (10) ist und eine zweite eine Umlenkscheibe (32) ist, wobei eine Heizeinrichtung (42) in Bewegungsrichtung des strangförmigen Gutes (22) zwischen der mindestens einen beheizten Scheibe (10) und der Umlenkscheibe (32) angeordnet ist.

8. Verfahren nach einem der vorhergehenden Ansprüche, **gekennzeichnet durch** die weiteren Schritte:
- die Temperatur der mindestens einen Scheibe (10) oder ein die Temperatur der Scheibe (10) charakterisierender Wert wird gemessen und mit einer für die mindestens eine Scheibe (10) vorgegebenen Temperatur oder einem eine solche Temperatur charakterisierenden Wert verglichen,
- auf Grundlage einer im Zuge des Vergleichs festgestellten Abweichung wird die Scheibentemperatur auf die vorgegebene Temperatur geregelt.

9. Verfahren nach einem der vorhergehenden Ansprüche, **dadurch gekennzeichnet, dass** zumindest die mindestens eine beheizte Scheibe (10) elektrisch leitend ist.

10. Verfahren nach einem der vorhergehenden Ansprüche, **dadurch gekennzeichnet, dass** die mindestens eine beheizte Scheibe (10) aus zwei Scheibenhälften gebildet wird, die thermisch voneinander isoliert sind.

11. Verfahren nach einem der vorhergehenden Ansprüche, **dadurch gekennzeichnet, dass** das strangförmige Gut (22) ein Draht (22) ist.

12. Verfahren nach Anspruch 11, **dadurch gekennzeichnet, dass** der Draht (22) nach dem Fördern über die mindestens eine Scheibe (10) einer Extrusionsvorrichtung zugeführt wird, in der eine Kunststoffisolation auf den Draht (22) extrudiert wird.

13. Vorrichtung zur Messung der Temperatur eines auf eine Solltemperatur zu erwärmenden strangförmigen Gutes, **gekennzeichnet durch**:
- eine Fördereinrichtung für das strangförmige Gut (22), die dazu ausgebildet ist, das strangförmige Gut (22) in wärmeleitendem Kontakt über mindestens eine drehbar gelagerte Scheibe (10) zu fördern,
- eine Scheibenheizeinrichtung (14), mit der die mindestens eine Scheibe (10) auf eine vorgegebene Temperatur beheizbar ist, und
- eine mindestens eine Infrarot-Messeinrichtung oder mindestens eine Wärmebildkamera umfassende Differenzmesseinrichtung, mit der eine Differenz zwischen der Temperatur des strangförmigen Gutes (22) oder einem die Temperatur des strangförmigen Gutes (22) charakterisierenden Wert vor dem Fördern über die mindestens eine Scheibe (10) und nach dem Fördern über die mindestens eine Scheibe (10) messbar ist.

14. Vorrichtung nach Anspruch 13, **dadurch gekennzeichnet, dass** die vorgegebene Temperatur der mindestens einen Scheibe (10) die Solltemperatur des strangförmigen Gutes (22) ist.

15. Vorrichtung nach einem der Ansprüche 13 oder 14, **dadurch gekennzeichnet, dass** die Fördereinrichtung dazu ausgebildet ist, das strangförmige Gut (22) einmal oder mehrmals um die mindestens eine Scheibe (10) herumzuführen.

16. Vorrichtung nach einem der Ansprüche 13 bis 15, **dadurch gekennzeichnet, dass** sie weiterhin eine Strangtemperaturregeleinrichtung umfasst, die dazu ausgebildet ist, die Temperatur des strangförmigen Gutes (22) auf Grundlage der gemessenen Differenz auf die Solltemperatur zu regeln.

17. Vorrichtung nach Anspruch 16, **dadurch gekennzeichnet, dass** die Strangtemperaturregeleinrichtung dazu ausgebildet ist, die Temperatur des strangförmigen Gutes (22) durch Anpassung der Temperatur der mindestens einen Scheibe (10) auf die Solltemperatur zu regeln.

18. Vorrichtung nach einem der Ansprüche 16 oder 17, **dadurch gekennzeichnet, dass** der mindestens einen Scheibe (10) in Bewegungsrichtung des strangförmigen Gutes (22) eine Heizeinrichtung (42) vorgeordnet ist, wobei die Strangtemperaturregeleinrichtung dazu ausgebildet ist, die Temperatur des strangförmigen Gutes (22) durch Anpassung der Heizeinrichtung (42) auf die Solltemperatur zu regeln.

19. Vorrichtung nach einem der Ansprüche 13 bis 18, **dadurch gekennzeichnet, dass** die Fördereinrichtung dazu ausgebildet ist, das strangförmige Gut (22) über zwei drehbar gelagerte Scheiben (10, 32) zu fördern, von denen eine erste die mindestens eine beheizte Scheibe (10) ist und eine zweite eine Umlenkscheibe (32) ist, wobei in Bewegungsrichtung des strangförmigen Gutes (22) eine Heizeinrichtung (42) zwischen der beheizten Scheibe (10) und der Umlenkscheibe (32) angeordnet ist.

20. Vorrichtung nach einem der Ansprüche 13 bis 19, **dadurch gekennzeichnet, dass** sie weiterhin umfasst:
- eine Scheibentemperaturmesseinrichtung, mit der die Temperatur der mindestens einen Scheibe (10) oder ein die Temperatur der mindestens einen Scheibe (10) charakterisierender Wert messbar und mit einer für die mindestens eine Scheibe (10) vorgegebenen Temperatur oder einem eine solche Temperatur charakterisierenden Wert vergleichbar ist,
- eine Scheibentemperaturregeleinrichtung (20), die dazu ausgebildet ist, auf Grundlage einer im Zuge des Vergleichs festgestellten Abweichung die Scheibentemperatur auf die vorgegebene Temperatur zu regeln.

21. Vorrichtung nach einem der Ansprüche 13 bis 20, **dadurch gekennzeichnet, dass** zumindest die mindestens eine beheizte Scheibe (10) elektrisch leitend ist.

22. Vorrichtung nach einem der Ansprüche 13 bis 21, **dadurch gekennzeichnet, dass** die mindestens eine beheizte Scheibe (10) zwei Scheibenhälften umfasst, die thermisch voneinander isoliert sind.

23. Vorrichtung nach einem der Ansprüche 13 bis 22, **dadurch gekennzeichnet, dass** das strangförmige Gut (22) ein Draht (22) ist.

24. Vorrichtung nach Anspruch 23, **dadurch gekennzeichnet, dass** sie weiterhin eine Extrusionsvorrichtung zum Extrudieren einer Kunststoffisolation auf den Draht (22) umfasst, wobei die Fördereinrichtung dazu ausgebildet ist, den Draht (22) nach dem Fördern über die mindestens eine Scheibe (10) der Extrusionsvorrichtung zuzuführen.

## Claims

1. A method for measuring the temperature of a strand-shaped item to be heated to a target temperature, **characterized by** the steps:
- the strand-shaped item (22) is conveyed in thermally-conductive contact via at least one rotatably mounted disc (10) which is heated to a predetermined temperature,
- by means of at least one infrared measuring apparatus or at least one thermal imaging camera, a difference is measured between the temperature of the strand-shaped item (22) or a value characterizing the temperature of the strand-shaped item (22), before the conveyance via the at least one disc (10) and after the conveyance via the at least one disc (10).

2. The method according to Claim 1, **characterized in that** the predetermined temperature of the at least one disc (10) is the target temperature of the strand-shaped item (22).

3. The method according to one of the preceding claims, **characterized in that** the strand-shaped item (22) is guided once or repeatedly about the at least one disc (10).

4. The method according to one of the preceding claims, **characterized in that** the temperature of the strand-shaped item (22) is regulated to the target temperature on the basis of the measured difference.

5. The method according to Claim 4, **characterized in that** the temperature of the strand-shaped item (22) is regulated to the target temperature by adapting the temperature of the at least one disc (10).

6. The method according to one of Claims 4 or 5, **characterized in that** the temperature of the strand-shaped item (22) is regulated to the target temperature by adapting a heating apparatus (42) arranged upstream of the at least one disc (10) in the direction of movement of the strand-shaped item.

7. The method according to one of the preceding claims, **characterized in that** the strand-shaped item (22) is guided via two rotatably mounted discs (10, 32), a first thereof being the at least one heated disc (10) and a second thereof being a deflection pulley (32), wherein a heating apparatus (42) is arranged in the direction of movement of the strand-shaped item (22) between the at least one heated disc (10) and the deflection pulley (32).

8. The method according to one of the preceding claims, **characterized by** the further steps:
- the temperature of the at least one disc (10) or a value characterizing the temperature of the disc (10) is measured and compared with a temperature which is predetermined for the at least one disc (10) or a value characterizing such a temperature,
- based on a deviation determined during the course of the comparison, the disc temperature is regulated to the predetermined temperature.

9. The method according to one of the preceding claims, **characterized in that** at least the at least one heated disc (10) is electrically conductive.

10. The method according to one of the preceding claims, **characterized in that** the at least one heated disc (10) is formed from two disc halves which are thermally insulated from one another.

11. The method according to one of the preceding claims, **characterized in that** the strand-shaped item (22) is a wire (22).

12. The method according to Claim 11, **characterized in that** after the conveyance via the at least one disc (10) the wire (22) is supplied to an extrusion device in which a plastics insulation is extruded onto the wire (22).

13. A device for measuring the temperature of a strand-shaped item to be heated to a target temperature, **characterized by**:
- a conveying apparatus for the strand-shaped item (22) which is configured to convey the strand-shaped item (22) in thermally-conductive contact via at least one rotatably mounted disc (10),
- a disc heating apparatus (14), the at least one disc (10) being able to be heated thereby to a predetermined temperature, and
- a difference measuring apparatus comprising at least one infrared measuring apparatus or at least one thermal imaging camera, a difference between the temperature of the strand-shaped item (22) or a value characterizing the temperature of the strand-shaped item (22) being able to be measured thereby before the conveyance via the at least one disc (10) and after the conveyance via the at least one disc (10).

14. The device according to Claim 13, **characterized in that** the predetermined temperature of the at least one disc (10) is the target temperature of the strand-shaped item (22).

15. The device according to one of Claims 13 or 14, **characterized in that** the conveying apparatus is configured to guide the strand-shaped item (22) once or repeatedly around the at least one disc (10).

16. The device according to one of Claims 13 to 15, **characterized in that** it further comprises a strand temperature regulating apparatus which is configured to regulate the temperature of the strand-shaped item (22) to the target temperature based on the measured difference.

17. The device according to Claim 16, **characterized in that** the strand temperature regulating apparatus is configured to regulate the temperature of the strand-shaped item (22) to the target temperature by adapting the temperature of the at least one disc (10).

18. The device according to one of Claims 16 or 17, **characterized in that** a heating apparatus (42) is arranged upstream of the at least one disc (10) in the direction of movement of the strand-shaped item (22), wherein the strand temperature regulating apparatus is configured to regulate the temperature of the strand-shaped item (22) to the target temperature by adapting the heating apparatus (42).

19. The device according to one of Claims 13 to 18, **characterized in that** the conveying apparatus is configured to convey the strand-shaped item (22) via two rotatably mounted discs (10, 32), a first thereof being the at least one heated disc (10) and a second thereof being a deflection pulley (32), wherein a heating apparatus (42) is arranged between the heated disc (10) and the deflection pulley (32) in the direction of movement of the strand-shaped item (22).

20. The device according to one of Claims 13 to 19, **characterized in that** it further comprises:
- a disc temperature measuring apparatus, the temperature of the at least one disc (10) or a value characterizing the temperature of the at least one disc (10) being able to be measured thereby and being able to be compared with a predetermined temperature for the at least one disc (10) or a value characterizing such a temperature.
- a disc temperature regulating apparatus (20) which is configured to regulate the disc temperature to the predetermined temperature, based on a deviation determined during the course of the comparison.

21. The device according to one of Claims 13 to 20, **characterized in that** at least the at least one heated disc (10) is electrically conductive.

22. The device according to one of Claims 13 to 21, **characterized in that** the at least one heated disc (10) comprises two disc halves which are thermally insulated from one another.

23. The device according to one of Claims 13 to 22, **characterized in that** the strand-shaped item (22) is a wire (22).

24. The device according to Claim 23, **characterized in that** it further comprises an extrusion device for extruding a plastics insulation onto the wire (22), wherein the conveying apparatus is configured to supply the wire (22) to the extrusion device after the conveyance via the at least one disc (10).

## Revendications

1. Procédé de mesure de la température d'un produit en forme de cordon à chauffer à une température de consigne, **caractérisé par** les étapes :
- le produit en forme de cordon (22) est transporté en contact thermoconducteur par le biais d'au moins un disque (10) logé à rotation, chauffé à une température prédéfinie,
- une différence entre la température du produit en forme de cordon (22) ou une valeur caractérisant la température du produit en forme de cordon (22) avant le transport par le biais de l'au moins un disque (10) et après le transport par le biais de l'au moins un disque (10) est mesurée au moyen d'au moins un dispositif de mesure infrarouge ou d'au moins une caméra à infrarouge.

2. Procédé selon la revendication 1, **caractérisé en ce que** la température prédéfinie de l'au moins un disque (10) est la température de consigne du produit en forme de cordon (22).

3. Procédé selon une des revendications précédentes, **caractérisé en ce que** le produit en forme de cordon (22) est guidé une fois ou plusieurs fois autour de l'au moins un disque (10).

4. Procédé selon une des revendications précédentes, **caractérisé en ce que** la température du produit en forme de cordon (22) est régulée sur la température de consigne sur la base de la différence mesurée.

5. Procédé selon la revendication 4, **caractérisé en ce que** la température du produit en forme de cordon (22) est régulée sur la température de consigne par adaptation de la température de l'au moins un disque (10).

6. Procédé selon une des revendications 4 ou 5, **caractérisé en ce que** la température du produit en forme de cordon (22) est régulée sur la température de consigne par adaptation d'un dispositif de chauffage (42) disposé en amont de l'au moins un disque (10) dans le sens de déplacement du produit en forme de cordon.

7. Procédé selon une des revendications précédentes, **caractérisé en ce que** le produit en forme de cordon (22) est guidé par le biais de deux disques (10, 32) logés à rotation parmi lesquels un premier disque est l'au moins un disque chauffé (10) et un second disque est un disque de renvoi (32), dans lequel un dispositif de chauffage (42) est disposé dans le sens de déplacement du produit en forme de cordon (22) entre l'au moins un disque chauffé (10) et le disque de renvoi (32).

8. Procédé selon une des revendications précédentes, **caractérisé par** les étapes supplémentaires :
- la température de l'au moins un disque (10) ou une valeur caractérisant la température du disque (10) est mesurée et comparée à une température prédéfinie pour l'au moins un disque (10) ou une valeur caractérisant une telle température,
- la température du disque est régulée sur la température prédéfinie sur la base d'un écart constaté au cours de la comparaison.

9. Procédé selon une des revendications précédentes, **caractérisé en ce qu'**au moins l'au moins un disque chauffé (10) est électriquement conducteur.

10. Procédé selon une des revendications précédentes, **caractérisé en ce que** l'au moins un disque chauffé (10) est formé de deux moitiés de disque qui sont isolées thermiquement l'une de l'autre.

11. Procédé selon une des revendications précédentes, **caractérisé en ce que** le produit en forme de cordon (22) est un fil métallique (22).

12. Procédé selon la revendication 11, **caractérisé en ce que** le fil métallique (22) est amené après le transport par le biais de l'au moins un disque (10) à un dispositif d'extrusion dans lequel une isolation plastique est extrudée sur le fil métallique (22).

13. Dispositif de mesure de la température d'un produit en forme de cordon à chauffer à une température de consigne, **caractérisé par** :
- un dispositif de transport pour le produit en forme de cordon (22) qui est réalisé pour transporter le produit en forme de cordon (22) en contact thermoconducteur par le biais d'au moins un disque (10) logé à rotation,
- un dispositif de chauffage de disque (14) avec lequel l'au moins un disque (10) peut être chauffé à une température prédéfinie, et
- un dispositif de mesure de différence comprenant au moins un dispositif de mesure infrarouge ou au moins une caméra à infrarouge avec lequel une différence entre la température du produit en forme de cordon (22) ou une valeur caractérisant la température du produit en forme de cordon (22) avant le transport par le biais de l'au moins un disque (10) et après le transport par le biais de l'au moins un disque (10) peut être mesurée.

14. Dispositif selon la revendication 13, **caractérisé en ce que** la température prédéfinie de l'au moins un disque (10) est la température de consigne du produit en forme de cordon (22).

15. Dispositif selon une des revendications 13 ou 14, **caractérisé en ce que** le dispositif de transport est réalisé pour guider le produit en forme de cordon (22) une fois ou plusieurs fois autour de l'au moins un disque (10).

16. Dispositif selon une des revendications 13 à 15, **caractérisé en ce qu'**il comprend en outre un dispositif de régulation de température de cordon qui est réalisé pour réguler la température du produit en forme de cordon (22) sur la température de consigne sur la base de la différence mesurée.

17. Dispositif selon la revendication 16, **caractérisé en ce que** le dispositif de régulation de température de cordon est réalisé pour réguler la température du produit en forme de cordon (22) sur la température de consigne par adaptation de la température de l'au moins un disque (10).

18. Dispositif selon une des revendications 16 ou 17, **caractérisé en ce qu'**un dispositif de chauffage (42) est disposé en amont de l'au moins un disque (10) dans le sens de déplacement du produit en forme de cordon (22), dans lequel le dispositif de régulation de température de cordon est réalisé pour réguler la température du produit en forme de cordon (22) sur la température de consigne par adaptation du dispositif de chauffage (42).

19. Dispositif selon une des revendications 13 à 18, **caractérisé en ce que** le dispositif de transport est réalisé pour transporter le produit en forme de cordon (22) par le biais de deux disques (10, 32) logés à rotation parmi lesquels un premier disque est l'au moins un disque chauffé (10) et un second disque est un disque de renvoi (32), dans lequel un dispositif de chauffage (42) est disposé dans le sens de déplacement du produit en forme de cordon (22) entre le disque chauffé (10) et le disque de renvoi (32).

20. Dispositif selon une des revendications 13 à 19, **caractérisé en ce qu'**il comprend en outre :
- un dispositif de mesure de température de disque avec lequel la température de l'au moins un disque (10) ou une valeur caractérisant la température de l'au moins un disque (10) peut être mesurée et peut être comparée à une température prédéfinie pour l'au moins un disque (10) ou une valeur caractérisant une telle température,
- un dispositif de régulation de température de disque (20) qui est réalisé pour réguler la température du disque sur la température prédéfinie sur la base d'un écart constaté au cours de la comparaison.

21. Dispositif selon une des revendications 13 à 20, **caractérisé en ce qu'**au moins l'au moins un disque chauffé (10) est électriquement conducteur.

22. Dispositif selon une des revendications 13 à 21, **caractérisé en ce que** l'au moins un disque chauffé (10) comprend deux moitiés de disque qui sont isolées thermiquement l'une de l'autre.

23. Dispositif selon une des revendications 13 à 22, **caractérisé en ce que** le produit en forme de cordon (22) est un fil métallique (22).

24. Dispositif selon la revendication 23, **caractérisé en ce qu'**il comprend en outre un dispositif d'extrusion pour l'extrusion d'une isolation plastique sur le fil métallique (22), dans lequel le dispositif de transport est réalisé pour amener le fil métallique (22) après le transport par le biais de l'au moins un disque (10) au dispositif d'extrusion.
